# FASCICULE DE BREVET EUROPEEN

(11) **EP 1 352 555 B1**
(45) Date de publication et mention de la délivrance du brevet: **27.08.2008**
(21) Numéro de dépôt: 03290904.6
(22) Date de dépôt: 10.04.2003
(51) Int. Cl.: A01G 3/025

(54) **Outil de coupe à deux mains tel que sécateur, taille-haies ou analogue**
Zweihändiges Schneidwerkzeug, wie Baumscheren, Heckenscheren oder dergleichen
Two-handed cutting tool, such as pruner, hedge shears or the like

(30) Priorité: 12.04.2002 FR 0204624
(43) Date de publication de la demande: 15.10.2003
(73) Titulaire: Deville S. A., 49150 Bauge (FR)
(72) Inventeur: Deville, Antoine, 49150 Vieil-Bauge (FR)
(74) Mandataire: Rémont, Claude

(56) Documents cités:
- DE-U- 20 005 825
- DE-U- 29 514 813
- US-A- 3 791 013
- US-A- 3 791 032
- US-A- 3 846 910
- US-A- 3 883 951

## Description

La présente invention concerne un outil de coupe à deux mains, tel que sécateur, taille-haies ou analogue, comprenant deux organes actifs, tels que lame et contre-lame ou deux lames allongées, montés de manière pivotante autour d'un axe transversal commun et adaptés à pivoter l'un contre l'autre le long d'un plan de coupe perpendiculaire à l'axe, chaque organe actif comportant au-delà de l'axe une partie terminale arrière correspondante qui s'étend dans une direction respective et qui est prolongée par un manche correspondant, chaque manche comprenant au moins un premier tronçon qui est proche dudit axe et qui s'étend sensiblement dans la direction de la partie terminale arrière correspondante.

Les manches, en général tubulaires, des outils de coupe connus sont rectilignes, ce qui donne à l'outil de coupe en position fermée un encombrement réduit permettant d'introduire facilement cet outil parmi les branches d'un arbre ou d'un taillis ou d'un fourré.

Les manches, qui font office de bras de levier, permettent d'appliquer aux deux organes actifs un effort de coupe qui est proportionnel à la longueur du bras de levier et à l'effort exercé à l'extrémité du dit bras de levier.

En particulier, dans US 3 791 013, un outil de coupe à deux mains est divulgué. Il correspond au préambule de la revendication 1 présentée plus loin.

En outre, dans US 3 791 013, chaque dite première direction respective suivant laquelle s'étendent ladite partie terminale arrière correspondante de l'organe actif considéré et le premier tronçon de chaque manche fait, avec le plan de coupe, un angle initial non nul.

Toutefois, l'effort musculaire à développer, par exemple l'effort musculaire nécessaire pour couper une branche ayant un diamètre de 2 à 3 cm, dans le cas d'un sécateur, reste important, cet effort pouvant être requis dans des positions de torsion importante du torse, des bras, des avant-bras et/ou des poignets. Il en résulte que la répétition des efforts de coupe provoque de la fatigue et, le cas échéant, des douleurs.

Le but de la présente invention est de remédier aux inconvénients précités des outils de coupe connus du type ci-dessus, et de proposer un outil de coupe de ce type de structure simple et fiable permettant de réduire les efforts musculaires et de diminuer les positions en torsion d'un utilisateur.

Suivant la présente invention, l'outil de coupe du type précité est caractérisé de la manière énoncée dans la partie caractérisante de la revendication 1 présentée ci-après.

L'utilisation d'un tel outil de coupe nécessite de la part de l'utilisateur des gestes plus simples et des positions du tronc, des bras, des avant-bras et des mains plus aisées, de sorte que, de façon surprenante, l'effort musculaire est, d'une manière générale, réduit.

Il en est de même des risques de douleurs musculaires et/ou articulaires qui sont souvent provoquées par une utilisation prolongée d'un outil de coupe selon l'art antérieur.

L'homme du métier des outils de coupe était dissuadé de modifier la forme rectiligne traditionnelle des manches par la crainte d'augmenter l'encombrement de l'outil de coupe au risque de rendre plus difficiles les manipulations de cet outil.

En fait, les manipulations d'un outil de coupe selon la présente invention ne sont pas plus difficiles que celles d'un outil de coupe classique.

Une structure avec un troisième tronçon tel que revendiqué apportera une nouvelle amélioration des positions d'utilisation et des efforts musculaires à développer lors de cette utilisation de l'outil de coupe selon la présente invention.

Suivant une version avantageuse de l'invention, le troisième tronçon fera avec la troisième direction correspondante un troisième angle, les deux troisièmes tronçons s'étendant par exemple entre lesdits plans respectifs.

Suivant une autre version de l'invention, l'outil de coupe sera un taille-haies ou analogue comportant deux lames allongées sensiblement rectilignes où ladite première direction fera avec le plan de coupe un angle initial, et où le premier angle sera orienté de préférence de manière à rapprocher pour chaque manche le second tronçon du plan de coupe.

D'autres particularités et avantages de la présente invention apparaîtront dans la description détaillée ci-après.

Aux dessins annexés, donnés uniquement à titre d'exemples non limitatifs :
- les figures 1, 2 et 3 sont respectivement une vue en perspective, une vue en élévation et une vue de dessus d'un outil de coupe selon un premier mode de réalisation de la présente invention ;
- Les figures 4 et 5 sont respectivement des vues schématiques en réduction et en perspective selon IV-IV et V-V à la figure 3, les axes géométriques des différents tronçons de manche étant seuls représentés ;
- les figures 6, 7 et 8 sont des vues semblables respectivement aux figures 1, 2 et 3 d'un outil de coupe selon une variante du mode de réalisation de la présente invention représenté aux figures 1, 2 et 3 ;
- Les figures 9 et 10 sont respectivement des vues schématiques en réduction et en perspective selon IX-IX et X-X à la figure 8, les axes géométriques des différents tronçons de manche étant seuls représentés;
- Les figures 11 et 12 sont respectivement une vue en élévation et une vue de dessus d'un outil de coupe selon un second mode de réalisation de la présente invention;
- Les figures 13 et 14 sont respectivement des vues schématiques en réduction et en perspective selon XIII-XIII et XIV-XIV à la figure 12, les axes géométriques des différents tronçons de manche étant seuls représentés.

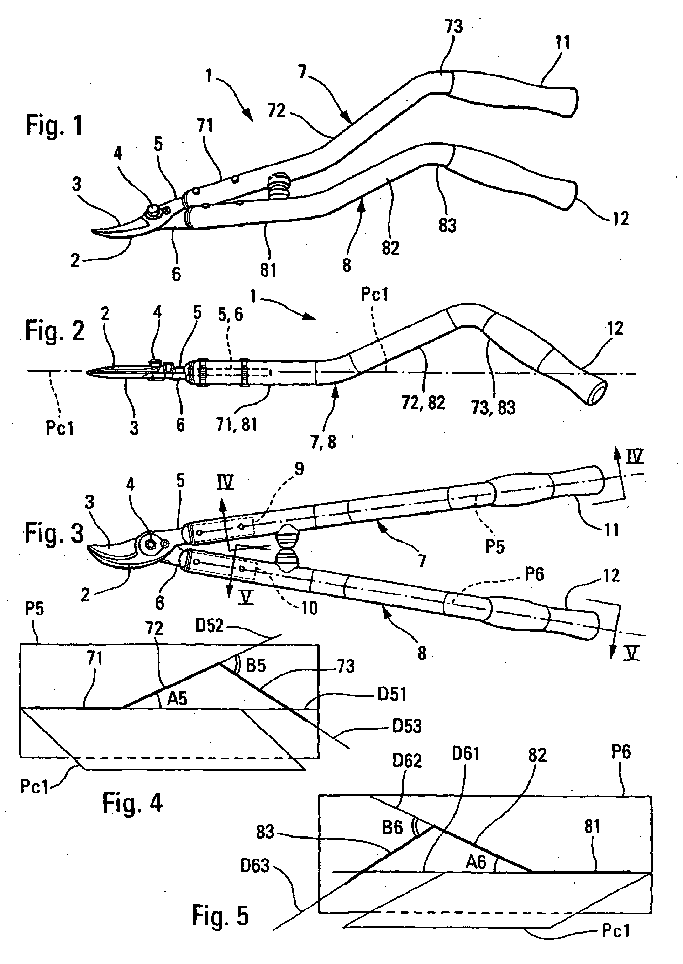

Dans le mode de réalisation représenté aux figures 1 à 5, l'outil de coupe 1 est un sécateur comprenant deux organes actifs 2, 3, une lame 3 et une contre-lame 2, montés de manière pivotante autour d'un axe transversal 4 commun.

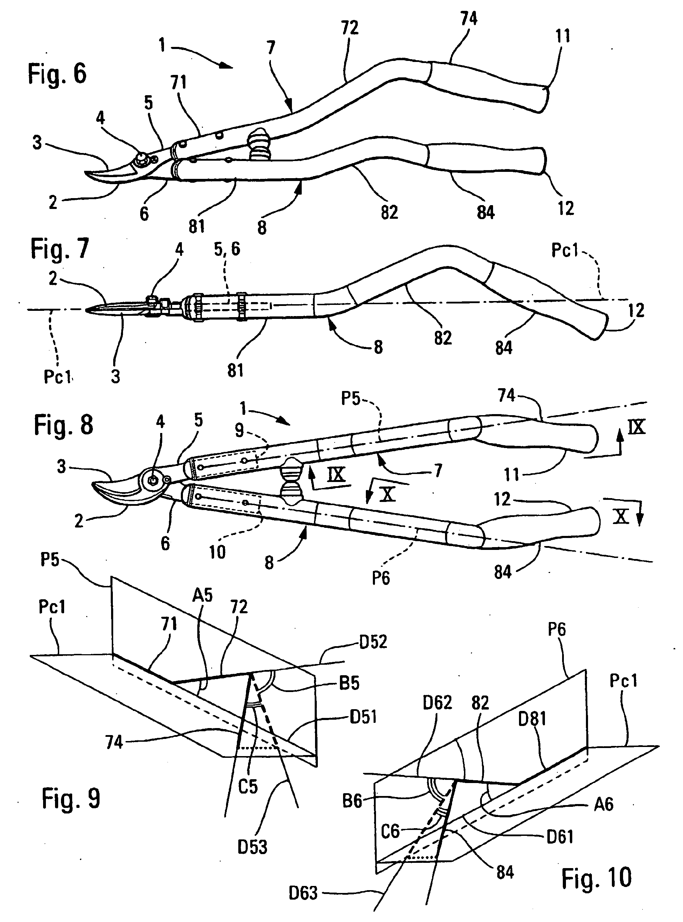

La lame 3 et la contre-lame 2 sont adaptées à pivoter l'une contre l'autre le long d'un plan de coupe Pc1 perpendiculaire à l'axe 4 et schématisé aux figures 2 et 7.

La contre-lame 2 et la lame 3 comportent chacune au-delà de l'axe 4 une partie terminale arrière correspondante 5, 6 qui s'étend dans une direction respective D5, D6, et qui est prolongée par un manche, en général tubulaire, correspondant 7, 8 entourant un élément intermédiaire correspondant 9, 10, en général surmoulé indiqué en pointillés aux figures 3 et 8.

Chaque manche 7, 8 se termine à son extrémité libre par une poignée correspondante 11, 12.

Le manche tubulaire 7,8 peut-être monté facilement, d'une manière connue quelconque, autour de la partie terminale arrière 5,6 et de l'élément intermédiaire 9, 10 correspondants, et présente une résistance intéressante à la torsion pour un poids déterminé. Toutefois, tout ce qui suit s'applique également à des manches non tubulaires montés d'une manière appropriée connue quelconque sur les parties arrière 5, 6.

Chaque manche 7, 8 comprend au moins un premier tronçon 71, 81 qui est proche de l'axe 4 et qui s'étend sensiblement dans le plan de coupe Pc1 dans la direction D51, D61, de la partie arrière 5, 6 correspondante.

Pour faciliter la description de l'invention et simpifier les figures, on assimilera par convention dans ce qui suit chaque tronçon de manche à son axe géométrique, chaque tronçon pouvant ainsi être considéré comme situé sensiblement dans le plan de son axe géométrique.

Chacun des deux manches 7, 8 comprend au moins un second tronçon 72, 82. Le second tronçon 72, 82 s'étend au-delà du premier tronçon 71, 81 suivant une seconde direction D52, D62, s'étendant sensiblement dans un plan de manche respectif P5, P6, qui contient la première direction D51, D61 et qui est perpendiculaire au plan de coupe Pc1. (Voir figures 4 et 5).

La seconde direction D52, D62, fait dans le plan de manche respectif P5, P6 un premier angle A5, A6, avec ladite première direction D51, D61 prolongée au-delà du premier tronçon 71, 81.

Le premier angle A5, A6, est compris entre 5°et 60°, avantageusement entre 15° et 40°, de préférence entre 20° et 35°.

Les angles A5 et A6 sont de préférence sensiblement égaux.

Comme représenté aux figures 1 à 5, chaque manche 7, 8 comprend en outre, au-delà du second tronçon 72,82, en s'éloignant de l'axe 4, un troisième tronçon 73, 83 qui se projette sur le plan respectif P5, P6 correspondant selon une troisième direction D53, D63, faisant dans ledit plan respectif P5, P6, un second angle B5, B6 avec la seconde direction D52, D62 correspondante prolongée au-delà du second tronçon 72, 82. (Voir figures 4 et 5).

Le second angle B5, B6 est compris entre 20°et 120°, avantageusement entre 40° et 110°,de préférence entre 50° et 100°.

Les angles B5 et B6 sont de préférence sensiblement égaux.

Dans le mode de réalisation des figures 1 à 5, le troisième tronçon 73, 83 est contenu dans le plan P5, P6 correspondant et est donc confondu avec sa projection dans ledit plan.

On a ainsi schématisé aux figures 4 et 5 la structure du manche 7, 8 par rapport au plan de coupe Pc et par rapport au plan correspondant P5, P6.

De façon plus précise, l'axe géométrique, qui est représenté par la direction D51, D61 correspondante, du premier tronçon 71, 81 du manche 7, 8, est situé à la fois dans le plan P5, P6 correspondant et sensiblement dans le plan de coupe Pc1 (ou dans un plan parallèle au plan Pc1 et très proche de celui-ci).

Les axes géométriques, qui sont représentés par les directions D52, D53 et D62, D63, des second et troisième tronçons 72, 73, 82, 83 du manche 7, 8, sont contenus respectivement dans le plan correspondant P5, P6.

Dans l'exemple représenté aux figures 1 à 5, les seconds tronçons 72 et 82 sont situés au-dessus du plan de coupe Pc1, c'est à dire du même côté que la contre-lame 2 par rapport à ce plan.

On peut également prévoir des seconds tronçons 72 et 82 s'étendant de l'autre côté du plan de coupe Pc1, c'est-à-dire du même côté que la lame 3 par rapport à ce plan.

Dans l'exemple représenté, l'angle B5, B6 est de même sens que l'angle A5, A6 par rapport à la direction D 52, D62 prolongée au-delà du second tronçon, de façon que les troisièmes tronçons 73, 83 ou 74, 84 s'étendent en se rapprochant du plan de coupe Pc1, les poignées 11, 12 se rapprochant alors dudit plan de coupe Pc.

Il est possible d'envisager un outil de coupe dans lequel l'angle B5, B6 serait de sens contraire à l'angle A5, A6 correspondant par rapport à la direction D52, D62.

Dans le mode de réalisation représenté aux figures 6 à 10, le manche 7, 8 comprend des premier et second tronçons 71, 72, 81, 82, identiques à ceux décrits ci-dessus en référence aux figures 1 à 5 et faisant entre eux un angle A5, A6.

Le manche 7, 8 comprend en outre, au-delà du second tronçon 72, 82 un troisième tronçon 74, 84 qui se projette sur le plan respectif P5, P6 correspondant selon une troisième direction D53, D63 faisant dans le plan respectif P5, P6 un second angle B5, B6 avec la seconde direction D52, D62 correspondante.

Le troisième tronçon 74, 84 fait avec la troisième direction D53, D63 correspondante un troisième angle C5, C6.

Dans ce mode de réalisation, les deux troisièmes tronçons 74, 84 s'étendent entre les plans P5, P6 respectifs, mais pourraient également s'étendre en s'éloignant l'un de l'autre.

Le troisième angle C5, C6 est en général inférieur à 45°, avantageusement inférieur à 30°, de préférence inférieur à 20°, cet angle étant mesuré d'un côté ou de l'autre du plan P5, P6 correspondant.

Les angles C5 et C6 sont de préférence sensiblement égaux.

On a ainsi décrit un outil de coupe qui permet, de façon surprenante, de diminuer les efforts musculaires et de limiter les positions extrêmes du tronc, des bras, des avant-bras et des poignets qui sont quelquefois nécessaires lors de l'utilisation d'un outil de coupe selon l'art antérieur, et donc de limiter les risques de douleurs musculaires ou articulaires provoquées par une utilisation prolongée d'un outil de coupe. Un tel outil de coupe est utilisé notamment pour la taille des arbres, en particulier dans l'arboriculture, fruitière ou autre.

On peut en variante couder les deuxième et troisième tronçons dans des sens opposés aux sens décrits ci-dessus par rapport au tronçon précédent.

On peut également prévoir que le second tronçon 72, 82 de chaque manche 7, 8 fasse un angle avec le plan P5, P6 correspondant au lieu d'être compris dans ce plan. Dans ce cas, l'angle A serait l'angle entre la projection du second tronçon 72, 82, sur le plan P5, P6, avec la première direction D51, D61 correspondante.

On peut également prévoir que les poignées 11 et 12 soient fixées directement à l'extrémité du deuxième tronçon correspondant.

Enfin, on pourrait également associer les manches coudés décrits ci-dessus, avec toutes leurs variantes, à une lame 3 et à une contre-lame 2 courbées dans le sens contraire au sens représenté aux figures, c'est-à-dire le tranchant convexe de la lame 3 étant situé du côté du manche 7, c'est-à-dire du côté du haut de la feuille sur les figures 1 à 3 et 6 à 8.

Dans tous les cas, et de manière classique, lors de l'utilisation d'un tel outil de coupe, la lame 3 est toujours située du côté du tronc de l'arbre, c'est-à-dire du côté amont de la branche à couper, et se trouve cachée par la contre-lame 2 en position fermée de l'outil pour l'utilisateur.

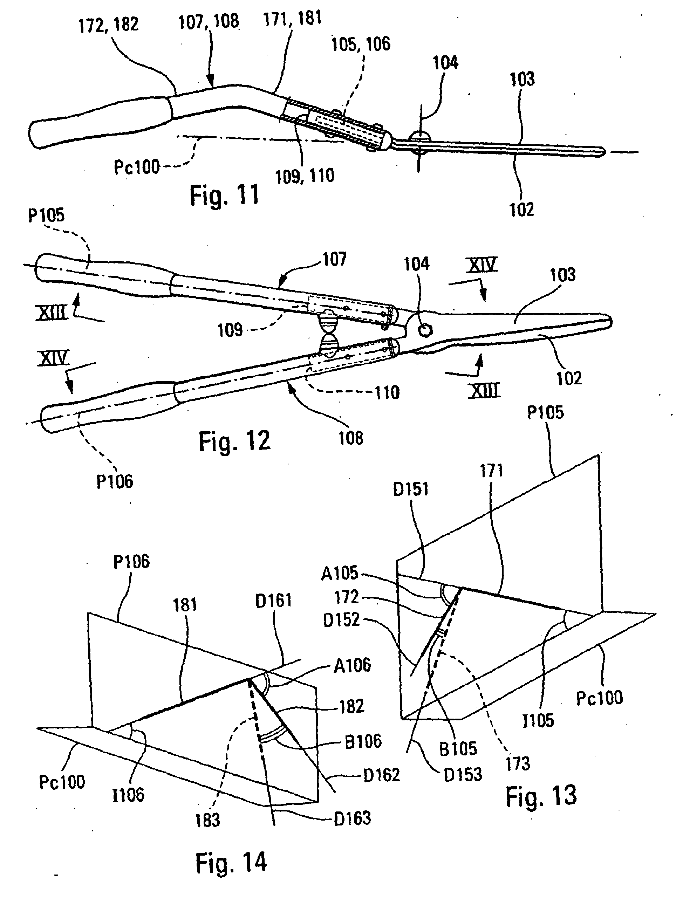

Dans le mode de réalisation représenté ou schématisé aux figures 11 à 14, l'outil de coupe 101 à deux mains est un taille-haies 101 comprenant deux organes actifs 102, 103 qui sont des lames allongées sensiblement rectilignes ayant, de manière classique, en coupe transversale des profils sensiblement semblables et symétriques.

Les deux lames 102, 103 sont montées de manière pivotante autour d'un axe transversal commun 104 et sont adaptées à pivoter l'une contre l'autre le long d'un plan de coupe Pc100 perpendiculaire à l'axe 104.

Chaque lame 102, 103, comporte au-delà de l'axe 104 une partie terminale arrière correspondante 105, 106 qui s'étend dans une direction respective D151, D161 et qui est prolongée par un manche correspondant 107, 108.

La partie terminale arrière 105, 106 de chaque lame 102, 103 s'étend selon une première direction respective D151, D161 qui s'étend dans un plan de manche respectif P105, P106 contenant la première direction respective D151, D161, et perpendiculaire au plan de coupe Pc100.

La première direction D151, D161 fait avec le plan de coupe Pc100 un angle initial I105, I106. Cet angle initial a pour but d'éloigner les mains d'un utilisateur du taille-haies du plan de coupe Pc100 et donc de la partie de la haie qui n'est pas taillée et qui subsiste après la taille.

Chaque manche 107, 108 comprend un premier tronçon 171, 181 qui est proche de l'axe 104 et qui s'étend sensiblement dans la direction D151, D161 de la partie terminale arrière 105, 106 correspondante.

La partie terminale arrière 105, 106 fait partie intégrante de l'organe actif 102, 103 correspondant et est reliée à cet organe actif par un simple coude ou par un système de coudes successifs plus complexe connu quelconque.

Suivant la présente invention, chacun des manches 107, 108 comprend au moins un second tronçon 172, 182 s'étendant au-delà du premier tronçon 171, 181 suivant une seconde direction D152, D162 qui s'étend sensiblement dans ledit plan de manche respectif P105, P106 contenant la première direction D151, D161, et qui est perpendiculaire au plan de coupe Pc100.

La seconde direction D152, D162 fait dans le plan respectif P105, P106, un premier angle A105, A106 avec la première direction D151, D161 correspondante prolongée au-delà du premier tronçon 171, 181, correspondant.

Le premier angle A105, A106 est orienté de préférence de manière à rapprocher le second tronçon 172, 182, du plan de coupe Pc100.

Le premier angle A105, A106 est compris entre 20° et 120°, avantageusement entre 40° et 110°, de préférence entre 50° et 100°.

Les angles A105, A106, sont de préférence sensiblement égaux.

Selon une variante schématisée aux figures 13 et 14, le second tronçon 173, 183 se projette sur le plan respectif P105, P106 selon la seconde direction D152, D162 correspondante, et fait avec cette seconde direction D152, D162 un second angle B105, B106, les seconds tronçons 173, 183 s'étendant par exemple entre les plans P105, P106, respectifs.

Les seconds angles B105 et B106 sont en général sensiblement égaux et sont en général inférieurs à 45° avantageusement inférieurs à 30°, de préférence inférieurs à 20°.

Dans le mode de réalisation des figures 11 à 14 décrit ci-dessus, les manches 107, 108 sont de préférence des manches tubulaires entourant un élément intermédiaire correspondant 109, 110 en général surmoulé sur la partie terminale arrière 105, 106 correspondante. Toutefois, la présente invention s'applique également à des manches non tubulaires reliés chacun d'une manière quelconque connue à la partie terminale arrière 105, 106 correspondante.

Bien entendu, la présente invention n'est pas limitée aux modes de réalisation que l'on vient de décrire, et on peut apporter à ceux-ci de nombreux changements et modifications sans sortir du domaine de l'invention.

La présente invention s'applique en particulier aux sécateurs et taille-haies (ou cisailles à haies) d'un type différent de celui décrit ci-dessus, par exemple aux outils de coupe à lames courtes comportant une lame rectiligne et une enclume.

## Revendications

1. Outil de coupe (1, 101) à deux mains, tel que sécateur (1) ou taille-haies (101) ou analogue, comprenant deux organes actifs (2, 3 ; 102, 103), tels que lame (3) et contre-lame (2) ou deux lames allongées (102, 103), montés de manière pivotante autour d'un axe transversal (4, 104) commun et adaptés à pivoter l'un contre l'autre le long d'un plan de coupe (Pc1, Pc100) perpendiculaire à l'axe (4, 104), chaque organe actif (2, 3 ; 102, 103) comportant au-delà de l'axe (4, 104) une partie terminale arrière correspondante (5, 6 ; 105, 106) qui s'étend dans une direction respective (D51, D61 ; D151, D161), et qui est prolongée par un manche (7, 8 ; 107, 108) présentant une extrémité terminale opposée à celle où il est monté sur l'organe actif, chaque manche (7,8 ; 107, 108) comprenant au moins un premier tronçon (71, 81 ; 171, 181) qui est proche dudit axe (4, 104) et qui s'étend sensiblement dans la direction (D51, D61 ; D151, D161), dite première direction respective, de la partie terminale arrière (5,6 ; 105, 106) correspondante, **caractérisé en ce que** l'outil est coudé en deux endroits, entre ledit axe transversal (4, 104) et ladite extrémité terminale de chaque manche (7,8;107,108), de telle sorte que :
- soit a), chaque dite première direction respective (D51, D61), suivant laquelle s'étendent donc ladite partie terminale arrière correspondante de l'organe actif considéré et le premier tronçon (71, 81) de chaque manche, s'étend sensiblement dans le plan de coupe (Pc1), et chaque manche (7, 8 ; 107, 108) comprend alors un second tronçon (72, 82) s'étendant au-delà du premier tronçon (71, 81) suivant une seconde direction (D52, D62) qui s'étend sensiblement dans un plan respectif (P5, P6) contenant ladite première direction (D51, D61) et perpendiculaire au plan de coupe (Pc1), cette seconde direction faisant, dans ledit plan respectif (P5, P6), un premier angle non nul (A5, A6) avec ladite première direction (D51, D61), ledit second tronçon (72, 82) se prolongeant par un troisième tronçon (73, 83; 74, 84) se projetant sur le plan respectif (P5, P6) correspondant selon une troisième direction (D53, D63) faisant, dans ledit plan respectif (P5, P6), un second angle (B5, B6) avec la seconde direction (D52, D62) correspondante,
- soit b), chaque dite première direction respective (D151, D161) fait, avec le plan de coupe (Pc100), un angle initial non nul (1105, 1106) et le premier tronçon (171, 181) de chaque manche se prolonge alors par un second tronçon (172, 182) s'étendant suivant une seconde direction (D152, D162) qui s'étend sensiblement dans un plan respectif (P105, P106) contenant ladite première direction (D151, D161) et perpendiculaire au plan de coupe (Pc100), cette seconde direction (D152, D162) faisant, dans ledit plan respectif (P105, P106), un premier angle (A105, A106) avec ladite première direction (D151, D161).

2. Outil de coupe selon la revendication 1, **caractérisé en ce que** l'outil de coupe (1) est un sécateur comprenant une lame (3) et une contre-lame (2) et présentant les caractéristiques a) de la revendication 1, la première direction (D51, D61) s'étend sensiblement dans le plan de coupe (Pc1) et le premier angle (A5, A6) est compris entre 5° et 60°.

3. Outil de coupe selon la revendication 1, **caractérisé en ce que** le second angle (B5, B6) est compris entre 20° et 120°.

4. Outil de coupe selon la revendication 1, **caractérisé en ce que** le second angle (B5, B6) est orienté de manière à rapprocher le troisième tronçon (73, 83 ; 74, 84) du plan de coupe (Pc1)

5. Outil de coupe selon la revendication 1, **caractérisé en ce que** le premier angle (A5, A6) est compris entre 20° et 35° et le second angle (B5, B6) est compris entre 50° et 100°.

6. Outil de coupe selon l'une quelconque des revendications précédentes, **caractérisé en ce que** le troisième tronçon (73, 83) est contenu dans le plan (P5, P6) correspondant.

7. Outil de coupe selon l'une quelconque des revendications précédentes, **caractérisé en ce que** le troisième tronçon (74, 84) fait avec la troisième direction (D53, D63) correspondante un troisième angle non nul (C5, C6),

8. Outil de coupe selon la revendication 7, **caractérisé en ce que** les deux troisièmes tronçons (74, 84) s'étendent entre les plans (P5, P6) respectifs.

9. Outil de coupe selon la revendication 7 ou 8, **caractérisé en ce que** le troisième angle (C5, C6) est inférieur à 45°.

10. Outil de coupe selon la revendication 1, **caractérisé en ce que** cet outil est un taille-haies (101) ou analogue présentant les caractéristiques b) de la revendication.

11. Outil de coupe selon la revendication 10, **caractérisé en ce que** le premier angle (A105, A106) est orienté de manière à rapprocher le second tronçon (172, 182) du plan de coupe (Pc100).

12. Outil de coupe selon la revendication 1, **caractérisé en ce que** le premier angle (A105, A106) est compris entre 20° et 120°.

13. Outil de coupe selon la revendication 1, 10, 11,ou 12 **caractérisé en ce qu'**il présente les caractéristiques b) de la revendication 1 et ledit second tronçon (173, 183) se projette sur le plan respectif (P105, P106) selon la seconde direction (D152, D162) correspondante et fait avec cette seconde direction (D152, D162) un second angle non nul (B105, B106).

## Claims

1. A two-handed cutting tool (1, 101), such as a pruner (1) or a hedge clipper (101) or the like, comprising two active members (2, 3; 102, 103), such as a blade (3) and an anvil blade (2), or two elongate blades (102, 103), mounted to pivot about a common transverse axis (4, 104) and adapted to pivot one against the other along a cutting plane (Pc1, Pc100) perpendicular to the pivot axis (4, 104), each active member (2, 3; 102, 103) having beyond the pivot axis (4, 104) a corresponding rear terminal portion (5, 6; 105, 106) which projects in a respective direction (D51, D61; D151, D161) and is extended by a shank (7, 8; 107, 108) having a terminal end opposite the end where it is mounted on the active member, each shank (7, 8; 107, 108) comprising at least a first segment (71, 81; 171, 181) which is close to said pivot axis (4, 104) and which extends in substantially the same direction (D51, D61; D151, D161), called first respective direction, of the corresponding rear terminal portion (5, 6; 105, 106), **characterized in that** said tool is angled at two places, between said transverse axis (4, 104) and said terminal end of each shank (7, 8 ; 107, 108), so that :
- either a), each said first respective direction (D51, D61), along which said corresponding rear terminal portion of the considered active member and the first segment (71, 81) of each shank thus extend, extends substantially in the cutting plane (Pc1), and each shank (7, 8; 107, 108) then comprises a second segment (72, 82) extending beyond the first segment (71, 81) according to a second direction (D52, D62) which extends substantially in a respective plane (P5, P6) containing said first direction (D51, D61) and perpendicular to the cutting plane (Pc1), said second direction making in said respective plane (P5, P6) a first non zero angle (A5, A6) with said first direction (D51, D61), said second segment (72, 82) being extended by a third segment (73, 83 ; 74, 84) which is projected on the corresponding respective plane (P5, P6) according to a third direction (D53, D63) making in said respective plane (P5, P6) a second angle (B5, B6) with the corresponding second direction (D52, D62),
- or b), each said first respective direction (D51, D61) makes with the cutting plane (Pc100) a non zero initial angle (I105, I106) and the first segment (171, 181) of each shank is then extended by a second segment (172, 182) extending according to a second direction (D152, D162) which extends substantially in a respective plane (P105, P106) containing said first direction (D151, D161) and perpendicular to the cutting plane (Pc100), said second direction (D152, D162) making in said respective plane (P105, P106) a first angle (A105, A106) with said first direction (D151, D161).

2. A cutting tool according to claim 1, **characterized in that** the cutting tool (1) is a pruner comprising a blade (3) and an anvil blade (2) and having the features a) of claim 1, the first direction (D51, D61) extends substantially in the cutting plane (Pc1), and the first angle (A5, A6) lies in the range 5° to 60°.

3. A cutting tool according to claim 1, **characterized in that** the second angle (B5, B6) lies in the range 20° to 120°.

4. A cutting tool according to claim 1, **characterized in that** the second angle (B5, B6) is so oriented as to bring the third segment (73, 83 ; 74, 84) towards the cutting plane (Pc1).

5. A cutting tool according to claim 1, **characterized in that** the first angle (A5, A6) lies in the range 20° to 35° and the second angle lies in the range 50° to 100°.

6. A cutting tool according to any one of the preceding claims, **characterized in that** the third segment (73, 83) lies within the corresponding plane (P5, P6).

7. A cutting tool according to any one of the preceding clams, **characterized in that** the third segment (74, 84) forms a non zero third angle (C5, C6) with the corresponding third direction (D53, D63).

8. A cutting tool according to claim 7, **characterized in that** the two third segments (74, 84) extend between the respective planes (P5, P6).

9. A cutting tool according to claim 7 or 8, **characterized in that** the third angle (C5, C6) is less than 45°.

10. A cutting tool according to claim 1, **characterized in that** said tool is a hedge clipper (101) or the like having the features b) of claims 1.

11. A cutting tool according to claim 10, **characterized in that** the first angle (A105, A106) is oriented preferably so as to bring the second segment (172, 182) towards the cutting plane (Pc100).

12. A cutting tool according to claim 1, **characterized in that** the first angle (A105, A106) lies in the range 20° to 120°.

13. A cutting tool according to claim 1, 10, 11 or 12, **characterized in that** it has the features b) of claim 1 and said second segment (173, 183) is projected on the respective plane (P105, P106) in the corresponding second direction (D152, D162) and forms a second non zero angle (B105, B106) with said second direction (D152, D162).

## Patentansprüche

1. Zweihändiges Schneidwerkzeug (1, 101), wie Baumscheren, Heckenscheren oder dergleichen, mit zwei Wirkelementen (2, 3; 102, 103), wie Klinge (3) und Gegenklinge (2) oder zwei lange Klingen (102, 103), die um eine gemeinsame Querachse (4, 104) schwenkbar montiert und so ausgebildet sind, dass sie gegeneinander entlang einer Schnittebene (Pc1, Pc100) senkrecht zur Achse (4, 104) schwenken können, wobei jedes Wirkelement (2, 3; 102, 103) jenseits der Achse (4, 104) einen korrespondierenden hinteren Endbereich (5, 6; 105, 106) umfasst, der sich in eine jeweilige Richtung (D51, D61; D151, D161) erstreckt, und der durch eine Griffstange (7, 8; 107, 108) verlängert ist, welche ein gegenüberliegendes Ende zu demjenigen aufweist, welches an das Wirkelement montiert ist, wobei jede Griffstange (7, 8; 107, 108) wenigstens ein erstes Teilstück (71, 81; 171, 181) umfasst, das nahe der Achse (4, 104) liegt und das sich im Wesentlichen in der Richtung (D51, D61; D151; D161), die sogenannte jeweilige Primärrichtung, von dem korrespondierenden hinteren Endbereich (5, 6; 105, 106) aus erstreckt, **dadurch gekennzeichnet, dass** das Werkzeug an zwei Stellen zwischen der Querachse (4, 104) und dem freien Ende jeder Griffstange (7, 8; 107 108) abgewinkelt ist, derart, dass:
- entweder a) sich jede jeweilige Primärrichtung (D51, D61), entlang welcher sich somit der hintere korrespondierende Endbereich des betreffenden Wirkelements und das erste Teilstück (71, 81) jeder Griffstange erstrecken, im Wesentlichen in der Schnittebene (Pc1) erstreckt, und jede Griffstange (7, 8; 107, 108) noch ein zweites Teilstück (72, 82) aufweist, das sich über das erste Teilstück (71, 81) hinaus in eine zweite Richtung (D52, D62) erstreckt, die sich im Wesentlichen in einer jeweiligen Ebene (P5, P6) erstreckt, welche die erste Richtung (D51, D61) enthält, und senkrecht zur Schnittebene (Pc1), wobei diese zweite Richtung in der jeweiligen Ebene (P5, P6) einen ersten Winkel ungleich Null (A5, A6) mit der ersten Richtung (D51, D61) bildet, wobei sich das zweite Teilstück (72, 82) durch ein drittes Teilstück (73, 83, 74, 84) verlängert, dass über die korrespondierende jeweilige Ebene (P5, P6) entlang einer dritten Richtung (D53, D63) vorsteht, welche in der jeweiligen Ebene (P5, P6) einen zweiten Winkel (B5, B6) mit der korrespondierenden zweiten Richtung (D52, D62) bildet,
- oder b) jede jeweilige Primärrichtung (D151, D161) mit der Schnittebene (Pc100) einen Anfangswinkel ungleich Null (I105, I106) bildet und das erste Teilstück (171, 181) jeder Griffstange sich auch durch ein zweites Teilstück (172, 182) verlängert, das sich in eine zweite Richtung (D 152, D 162) erstreckt, die sich im Wesentlichen in eine jeweilige Ebene (P105, P106) erstreckt, welche die erste Richtung (D151, D161) enthält, und senkrecht zur Schnittebene (Pc100), wobei diese zweite Richtung (D152, D162) in der jeweiligen Ebene (P105, P106) einen ersten Winkel (A105, A 106) mit der ersten Richtung (D151, D161) bildet.

2. Schneidwerkzeug nach Anspruch 1, **dadurch gekennzeichnet, dass** das Schneidwerkzeug (1) eine Baumschere mit einer Klinge (3) und einer Gegenklinge (2) ist und die Merkmale a) des Anspruchs 1 aufweist, wobei sich die erste Richtung (D51, D61) im Wesentlichen in der Schnittebene (Pc1) erstreckt und der erste Winkel (A5, A6) zwischen 5° und 60° liegt.

3. Schneidwerkzeug nach Anspruch 1, **dadurch gekennzeichnet, dass** der zweite Winkel (B5, B6) zwischen 20° und 120° liegt.

4. Schneidwerkzeug nach Anspruch 1, **dadurch gekennzeichnet, dass** der zweite Winkel (B5, B6) so ausgerichtet ist, dass das dritte Teilstück (73, 83; 74, 84) der Schnittebene (Pc1) näher gebracht wird.

5. Schneidwerkzeug nach Anspruch 1, **dadurch gekennzeichnet, dass** der erste Winkel (A5, A6) zwischen 20° und 35° liegt und der zweite Winkel (B5, B6) zwischen 50° und 100° liegt.

6. Schneidwerkzeug nach einem der vorhergehenden Ansprüche, **dadurch gekennzeichnet, dass** das dritte Teilstück (73, 83) in der korrespondierenden Ebene (P5, P6) enthalten ist.

7. Schneidwerkzeug nach einem der vorhergehenden Ansprüche, **dadurch gekennzeichnet, dass** das dritte Teilstück (74, 84) mit der korrespondierenden dritten Richtung (D53, D63) einen dritten Winkel ungleich Null (C5, C6) bildet.

8. Schneidwerkzeug nach Anspruch 7, **dadurch gekennzeichnet, dass** sich die zwei dritten Teilstücke (74, 84) zwischen den jeweiligen Ebenen (P5, P6) erstrecken.

9. Schneidwerkzeug nach Anspruch 7 oder 8, **dadurch gekennzeichnet, dass** der dritte Winkel (C5, C6) kleiner als 45° ist.

10. Schneidwerkzeug nach Anspruch 1, **dadurch gekennzeichnet, dass** dieses Werkzeug eine Heckenschere (101) oder dergleichen ist, welche die Merkmale b) des Anspruchs aufweist.

11. Schneidwerkzeug nach Anspruch 10, **dadurch gekennzeichnet, dass** der erste Winkel (A105, A106) so ausgerichtet ist, dass das zweite Teilstück (172, 182) der Schnittebene (Pc100) angenähert wird.

12. Schneidwerkzeug nach Anspruch 1, **dadurch gekennzeichnet, dass** der erste Winkel (A105, A106) zwischen 20° und 120° liegt.

13. Schneidwerkzeug nach Anspruch 1, 10, 11 oder 12, **dadurch gekennzeichnet, dass** dieses die Merkmale b) des Anspruchs 1 aufweist und das zweite Teilstück (713, 183) über die jeweilige Ebene (P105, P106) entlang der korrespondierenden zweiten Richtung (D 152, D 162) vorsteht und mit dieser zweiten Richtung (D 152, D 162) einen zweiten Winkel ungleich Null (B105, B 106) bildet.
